# EUROPEAN PATENT APPLICATION

(11) **EP 4 521 630 A1**
(43) Date of publication of application: **12.03.2025**
(21) Application number: 23896343.3
(22) Date of filing: 25.10.2023
(51) Int. Cl.: H02S 20/00, H02S 20/10, H02S 20/30, F24S 25/50

(54) **PHOTOVOLTAIC SYSTEM AND FLEXIBLE BRACKET THEREOF**

(30) Priority: 02.12.2022 CN 202211536745
(71) Applicant: Trina Solar Co., Ltd, Changzhou, Jiangsu 213031 (CN)
(72) Inventor: DAI, Yuli, Changzhou, Jiangsu 213031 (CN); QIANG, Shengguan, Changzhou, Jiangsu 213031 (CN); PANG, Yuewen, Changzhou, Jiangsu 213031 (CN); QUAN, Peng, Changzhou, Jiangsu 213031 (CN)
(74) Representative: Arnold & Siedsma
(86) International application number: PCT/CN2023/126479
(87) International publication number: WO 2024/114188

(57) **Abstract**

A photovoltaic system and a flexible bracket (1) thereof. The flexible bracket (1) comprises: at least two support members (10) spaced in a first direction, wherein component cables (20) and stabilizing cables (30) are mounted between two adjacent support members (10) in the first direction, and the component cables (20) form a bearing surface (210); joint members (50) connected to both the stabilizing cables (30) and the component cables (20); and semi-rigid inverted-arch cables (40), wherein a first end (401) of each semi-rigid inverted-arch cable (40) is provided with a rigid portion (410) connected to the joint member (50), and a second end (402) of each semi-rigid inverted-arch cable (40) is connected to the support member (10).

## Description

### CROSS-REFERENCE TO RELATED APPLICATIONS

This application claims priority to Chinese Patent Application No. 2022115367450, entitled "PHOTOVOLTAIC SYSTEM AND FLEXIBLE BRACKET THEREOF" and filed on December 2, 2022, the entire contents of which are incorporated herein by reference.

### TECHNICAL FIELD

The present application relates to the field of photovoltaic technologies, and in particular, to a photovoltaic system and a flexible bracket thereof.

### BACKGROUND

Due to site conditions of different scenarios, requirements for spans of flexible brackets configured to carry photovoltaic modules are also constantly increasing. An increase in a span of a flexible bracket may cause an increase in cable deflection, which may cause overall instability of a joint member under the action of a wind load, resulting in serious losses such as hidden cracking and falling off of photovoltaic modules and even collapse of the joint member.

In the related art, a large number of connecting rods and cross-arranged cables are generally used to achieve a purpose of increasing stability. Implementation of these methods is complicated in construction, high in cost, and generally poor in resistance to wind suction.

In the related art, a multi-layer cable structure is also used to achieve simultaneous resistance to wind pressure and wind suction, in which case joint members are generally used to connect various layers of cables. However, due to existence of a plurality of joints between the joint members and different cables, the construction is cumbersome and inconvenient for subsequent maintenance. At the same time, when an actual vertical wind load is generally not perpendicular to the ground, there are hidden stresses on the joint member. In addition, when the photovoltaic module is offset by crosswind, it is also easy to cause damage to the joint member due to an excessive shear force.

### SUMMARY

According to various embodiments of the present application, a flexible bracket is provided.

A flexible bracket includes: a support member, at least two support members being spaced apart in a first direction, an assembly cable and a stabilizing cable being mounted between two adjacent support members in the first direction, where the assembly cable forms a carrying surface; a joint member connected to both the stabilizing cable and the assembly cable; and a semi-rigid anti-arch cable, a first end of the semi-rigid anti-arch cable having a rigid part connected to the joint member, and a second end of the semi-rigid anti-arch cable being connected to the support member.

According to some embodiments of the present application, the rigid part and the joint member are relatively movably connected to each other. According to some embodiments of the present application, the rigid part and the joint member are movable relative to each other at least in a second direction, the second direction being perpendicular to the first direction and perpendicular to a height direction of the support member. According to some embodiments of the present application, the rigid part and the joint member are movable relative to each other at least in a height direction of the support member. According to some embodiments of the present application, the semi-rigid anti-arch cable includes the rigid part, a flexible cable connected to the rigid part, the flexible cable being connected to the support member. According to some embodiments of the present application, the rigid part and the joint member are in spherical pair fit to be relatively movably connected to each other. According to some embodiments of the present application, the rigid part is configured to be adjustable in length. According to some embodiments of the present application, the rigid part includes a first connecting member and a second connecting member that form a screw fitting pair. The first connecting member is connected to the joint member, and the second connecting member is configured to be connected to the support member. According to some embodiments of the present application, the first connecting member includes a sleeve and a spherical hinge fitting member located at a head end of the sleeve. An inner cavity of the sleeve includes a threaded section. The spherical hinge fitting member and the joint member form a spherical fitting pair. The second connecting member includes a screw rod fitting the threaded section. A limiting member is further arranged on the screw rod. The limiting member is configured to prevent the screw rod from being separated from the sleeve. According to some embodiments of the present application, the limiting member is located on a side of the threaded section adjacent to the joint member. In a radial direction of the sleeve, a dimension of the limiting member is greater than an inner diameter of the threaded section; or the inner cavity of the sleeve is provided with a blocking structure configured to axially block the limiting member. According to some embodiments of the present application, in an axial direction of the sleeve, the spherical hinge fitting member is removably arranged at the head end of the sleeve, the threaded section is arranged at a tail end of the sleeve, and the limiting member is removably arranged on the screw rod.

According to some embodiments of the present application, the rigid part includes a first part and a second part movably connected to the first part, the first part being connected to the joint member, and the second part being connected to the support member. According to some embodiments of the present application, the joint member is mounted on the stabilizing cable in a position-adjustable manner. According to some embodiments of the present application, the stabilizing cable is in frictional connection with to the joint member. According to some embodiments of the present application, the joint member is provided with a through hole; the stabilizing cable extends through the through hole; and an outer diameter of the stabilizing cable matches an inner hole of the through hole. According to some embodiments of the present application, the flexible bracket further includes trussed poles connected to the joint member. Part of the trussed poles are connected to the assembly cable. In a second direction, adjacent joint members are interconnected through at least one trussed pole, the second direction being perpendicular to the first direction and perpendicular to a height direction of the support member. According to some embodiments of the present application, in the first direction, each of a head and a tail of the stabilizing cable is provided with the joint member and the semi-rigid anti-arch cable, and a middle section of the stabilizing cable is connected to the assembly cable through support joints. According to some embodiments of the present application, a length of a portion of the stabilizing cable between the joint member and the support member is L1, and a total length of the stabilizing cable is L2, where L1/L2 ranges from 1/5 to 1/4. According to some embodiments of the present application, in a height direction of the support member, the first end of the semi-rigid anti-arch cable is higher than the second end of the semi-rigid anti-arch cable; and the stabilizing cable is configured in an arch shape with an opening facing upward.

According to various embodiments of the present application, a photovoltaic system is further provided, including the flexible bracket according to any one of the above embodiments; and a plurality of photovoltaic modules, the photovoltaic modules being mounted on the carrying surface.

### BRIEF DESCRIPTION OF THE DRAWINGS

In order to more clearly illustrate the technical solutions in embodiments of the present application or the conventional art, the accompanying drawings used in the description of the embodiments or the conventional art will be briefly introduced below. It is apparent that, the accompanying drawings in the following description only illustrate some embodiments of the present application, and other drawings can be obtained by those of ordinary skill in the art from the provided drawings without creative efforts.
FIG. 1 is a structural schematic diagram of a flexible bracket according to embodiments of the present application.
FIG. 2 is a front view of the flexible bracket in FIG. 1.
FIG. 3 is a left view of the flexible bracket in FIG. 1.
FIG. 4 is a sectional view taken along A-A in FIG. 1.
FIG. 5 is a top view of the flexible bracket in FIG. 1.
FIG. 6 is a structural schematic diagram of a flexible bracket according to embodiments of the present application.
FIG. 7 is an enlarged view of Part B in FIG. 6.
FIG. 8 is a schematic diagram of force on the flexible bracket when subjected to crosswind according to embodiments of the present application.
FIG. 9 is a schematic diagram of the flexible bracket when subjected to wind pressure according to embodiments of the present application.
FIG. 10 is a schematic diagram of a semi-rigid anti-arch cable of the flexible bracket when being excessively loose according to embodiments of the present application.
FIG. 11 is a schematic diagram of an assembly cable of the flexible bracket when being deformed due to wind suction according to embodiments of the present application.
FIG. 12 is a schematic diagram of a rigid part of the semi-rigid anti-arch cable and a joint member when being assembled according to embodiments of the present application.
FIG. 13 is a diagram of an assembly of the rigid part of the semi-rigid anti-arch cable and a base body of the joint member according to embodiments of the present application.
FIG. 14 is an exploded view of the assembly shown in FIG. 13.
FIG. 15 is a schematic sectional view of the assembly shown in FIG. 13 in a direction in which the rigid part is connected to the joint member.

Illustration for related reference signs:
1: flexible bracket; 10: support member; 110: column; 120: beam; 130: stayed cable; 20: assembly cable; 210: carrying surface; 220: first sub-cable; 230: second sub-cable; 30: stabilizing cable; 40: semi-rigid anti-arch cable; 401: first end; 402: second end; 410: rigid part; 411: first connecting member; 4111: outer spherical surface; 4112: spherical hinge fitting member; 4113: sleeve; 4114: inner cavity; 4115: threaded section; 4116: spherical hinge end cover; 4117: screw; 4118: first flange; 4119: second flange; 412: second connecting member; 4121: screw rod; 4122: pin hole; 4123: limiting member; 413: cable plate; 414: pin shaft; 415: split pin; 420: flexible cable; 50: joint member; 510: base body; 511: through hole; 512: first base body; 513: second base body; 514: groove; 520: inner spherical surface; 530: mounting position; 531: lug; 532: connecting hole; 60: trussed pole; 70: support joint; 2: photovoltaic module; 201: front surface.

### DETAILED DESCRIPTION

The technical solutions in the embodiments of the present application will be described clearly and completely below with reference to the accompanying drawings in the embodiments of the present application. Apparently, the described embodiments are merely some of rather than all of the embodiments of the present application. All other embodiments obtained by those of ordinary skill in the art without creative efforts based on the embodiments of the present application shall fall within the protection scope of the present application.

In order to make the above objects, features, and advantages of the present application more obvious and understandable, specific implementations of the present application are described in detail below with reference to the accompanying drawings. In the following description, many specific details are set forth in order to fully understand the present application. However, the present application can be implemented in many other ways different from those described herein, and those skilled in the art can make similar improvements without departing from the connotation of the present application. Therefore, the present application is not limited by specific embodiments disclosed below. In the description of the embodiments of the present application, the term "and/or" is merely for an association relationship describing associated objects, indicating that three relationships may exist. For example, A and/or B indicates that there are three cases of A alone, both of A and B, and B alone. In addition, the character "/" herein generally indicates an "or" relationship between the associated objects before and after the term.

Some embodiments of the present application provide a flexible bracket. Various embodiments are described based on an example in which the flexible bracket carries photovoltaic modules to form a photovoltaic system. However, it may be understood that the flexible bracket in the present application is not limited to being configured for the mounting of photovoltaic modules.

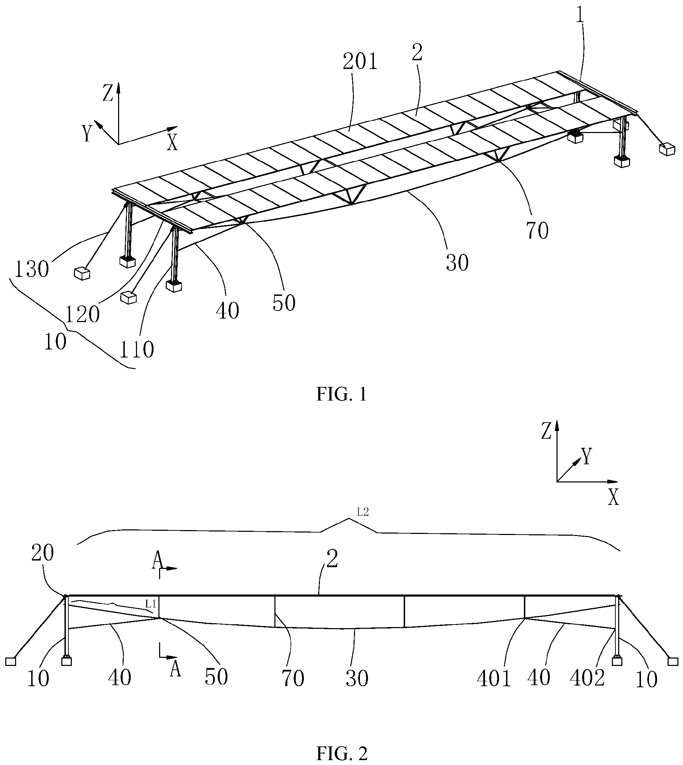

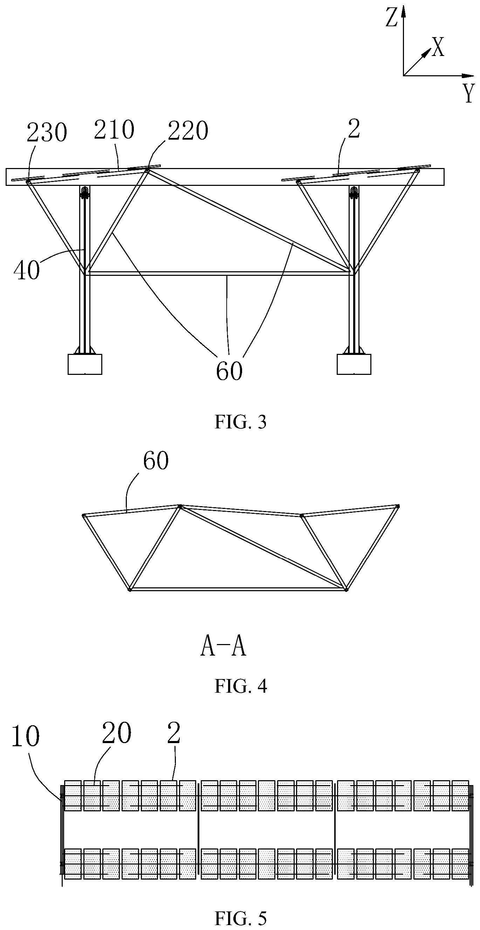

Referring to FIG. 1 to FIG. 5, FIG. 1 is a structural schematic diagram of a flexible bracket 1 according to some embodiments of the present application; FIG. 2 is a front view of the flexible bracket 1 in FIG. 1; FIG. 3 is a left view of the flexible bracket 1 in FIG. 1; FIG. 4 is a sectional view taken along A-A in FIG. 1; and FIG. 5 is a top view of the flexible bracket 1 in FIG. 1.

As shown in FIG. 1 and FIG. 2, the present application provides a flexible bracket 1. The flexible bracket 1 includes support members 10, an assembly cable 20, a stabilizing cable 30, semi-rigid anti-arch cables 40, and joint members 50. At least two support members 10 are spaced apart in a first direction X. The assembly cable 20 and the stabilizing cable 30 are mounted between two adjacent support members 10 in the first direction X. The assembly cable 20 forms a carrying surface 210 (see FIG. 3). As shown in FIG. 2, a first end 401 of the semi-rigid anti-arch cable 40 is connected to the joint member 50, and a second end 402 of the semi-rigid anti-arch cable 40 is connected to the support member 10. The first end 401 and the joint member 50 may be fixedly connected to each other or relatively movably connected to each other. Moreover, the first end 401 and the joint member 50 may be directly connected to each other or be connected to each other via an intermediate element. The joint member 50 is further connected to both the assembly cable 20 and the stabilizing cable 30. A plurality of photovoltaic modules 2 are mounted on the carrying surface 210 of the flexible bracket 1 to form a photovoltaic system. The plurality of photovoltaic modules 2 are arranged on the carrying surface 210 and are arranged in a row along the first direction X.

At least two support members 10 are spaced apart in the first direction X. Only two support members 10 are illustrated in FIG. 1 to FIG. 3. In specific applications, the first direction X may be an eastward-westward direction, a northward-southward direction, or other directions. Further, a plurality of rows of photovoltaic modules 2 may be arranged in a second direction Y. As shown in FIG. 1, the second direction Y intersects the first direction X and is perpendicular to a height direction Z of the support member 10. For example, as shown in FIG. 1, each support member 10 includes at least two columns 110 spaced apart in the second direction Y and a beam 120 connecting the two columns 110. Two ends of the assembly cable 20 and two ends of the stabilizing cable 30 are connected to two beams 120 respectively. A length of the beam 120 may be arranged so that a plurality of assembly cables 20 and a plurality of stabilizing cables 30 can be arranged in the second direction Y. Therefore, the plurality of rows of photovoltaic modules 2 can be arranged in the second direction Y. As shown in FIG. 1, two rows of photovoltaic modules 2 are illustrated. Further, in the example, each column 110 of the support member 10 is further connected to a stayed cable 130. The stayed cable 130 is configured to be connected to a mounting foundation (such as the ground) of the flexible bracket 1, thereby improving stability of the support member 10. Preferably, both the column 110 and the beam 120 are made of steel. Preferably, the stayed cable 130 is selected to be a flexible steel cable and have a long service life.

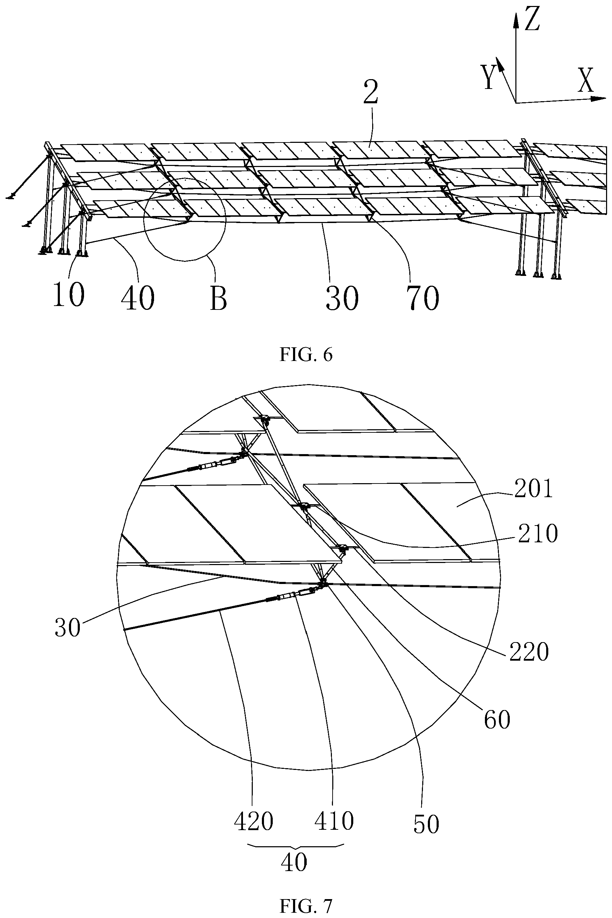

The assembly cable 20 is arranged between two adjacent support members 10 in the first direction X. For example, two ends of the assembly cable 20 are connected to two beams 120 respectively. For example, referring to FIG. 6 and FIG. 7, FIG. 6 is a structural schematic diagram of the flexible bracket 1 according to some embodiments of the present application; and FIG. 7 is an enlarged view of Part B in FIG. 6. As shown in FIG. 3 and FIG. 7, the assembly cable 20 includes a first sub-cable 220 and a second sub-cable 230. The first sub-cable 220 and the second sub-cable 230 are arranged in the second direction Y. In the height direction of the support member 10, the first sub-cable 220 and the second sub-cable 230 have different heights. In a specific implementation, two ends of the first sub-cable 220 are connected to upper parts of the two beams 120, and two ends of the second sub-cable 230 are connected to lower parts of the two beams 120, so that the first sub-cable 220 and the second sub-cable 230 have different heights. Preferably, the assembly cable 20 is selected to be a flexible steel cable.

Referring to FIG. 1, FIG. 3, and FIG. 7, the first sub-cable 220 and the second sub-cable 230 have different heights so that the carrying surface 210 has a certain angle relative to a horizontal plane. Therefore, the photovoltaic module 2 has a certain angle relative to the horizontal plane, so that a front surface 201 (light-receiving surface) of the photovoltaic module 2 can better receive sunlight. Specifically, as shown in FIG. 3, in the second direction Y, two ends of the photovoltaic module 2 have different heights. When the first direction X is the eastward-westward direction, the two ends of the photovoltaic module 2 have different heights in the northward-southward direction, so that the front surface 201 of the photovoltaic module 2 can face the sun, so as to better receive the sunlight.

In the present application, the term "wind pressure" refers to a wind load acting on the front surface 201 of the photovoltaic module 2 in a vertically downward direction. In this case, the load may act on the assembly cable 20 in the form of a joint load, and then be transferred to the stabilizing cable 30 through the joint member 50. In addition, the load borne by the front surface 201 of the photovoltaic module 2 is not limited to the wind load, and for example, also includes a snow load, a dust load, and the like, in which cases the stabilizing cable 30 achieves the same function. The term "wind suction" refers to a wind load acting on a back surface of the photovoltaic module 2 in a vertically upward direction. In this case, the joint load is transferred to the assembly cable 20 and the semi-rigid anti-arch cable 40 through the joint member 50.

As shown in FIG. 1 and FIG. 2, the stabilizing cable 30 is arranged between two adjacent support members 10 in the first direction X. The stabilizing cable 30 is configured to provide tension when bearing wind pressure, to maintain stability of the assembly cable 20. Preferably, the stabilizing cable 30 is selected to be a flexible steel cable. For example, two ends of the stabilizing cable 30 are connected to the beams 120 of the two support members 10 respectively.

The semi-rigid anti-arch cable 40 is configured to provide tension when the joint member 50 is subjected to wind suction, so as to prevent damage to the photovoltaic module 2 due to upward deformation of the assembly cable 20. Through the arrangement of the stabilizing cable 30 and the semi-rigid anti-arch cable 40, the flexible bracket 1 in the present application has a strong capability to resist wind pressure and wind suction and can effectively prevent structural instability, thereby adapting to design and application requirements of the large-span flexible bracket 1. For example, referring to FIG. 2, in the height direction of the support member 10, the first end 401 of the semi-rigid anti-arch cable 40 is higher than the second end 402 of the semi-rigid anti-arch cable 40; and the stabilizing cable 30 is configured in an arch shape with its opening facing upward. Therefore, the stabilizing cable 30 can provide tension when be subjected to the wind pressure. The semi-rigid anti-arch cable 40 is arranged obliquely downward, and thus can provide tension when the joint member 50 is subjected to vertically upward wind suction.

Referring to FIG. 1, FIG. 6, and FIG. 7, the joint member 50 connects the stabilizing cable 30, the semi-rigid anti-arch cable 40, and the assembly cable 20, to form a relatively stable support system. The joint member 50 may be connected to the stabilizing cable 30, the semi-rigid anti-arch cable 40, and the assembly cable 20 directly or through trussed poles 60. A specific structural form of the trussed pole 60 is not limited. For example, the joint member 50 may have a plurality of connection positions distributed in a triangular shape, which are respectively configured to connect the stabilizing cable 30, the semi-rigid anti-arch cable 40, and the first sub-cable 220 and the second sub-cable 230 of the assembly cable 20. For example, the connection positions may be directly connected to the stabilizing cable 30 and other cables, or may be connected to the stabilizing cable 30 and other cables through trussed poles.

Referring to FIG. 1 and FIG. 7, the first end 401 of the semi-rigid anti-arch cable 40 has a rigid part 410 connected to the joint member 50, and the second end 402 of the semi-rigid anti-arch cable 40 is connected to the support member 10. In the present application, "semi-rigid" refers to a hybrid structure having rigidity and flexibility. For example, the semi-rigid anti-arch cable 40 may include a rigid part 410 and a flexible cable 420 that are connected to each other, so as to form a semi-rigid structure. In another example, the semi-rigid anti-arch cable 40 may include a flexible cable 420, and a partial region of the flexible cable 420 is configured to be covered by the rigid part 410.

In the present application, the first end 401 of the semi-rigid anti-arch cable 40 of the flexible bracket 1 is configured to have the rigid part 410 and is connected to the joint member 50 through the rigid part 410. In this way, a "joint connecting component" formed by the rigid part 410 of the semi-rigid anti-arch cable 40 and the joint member 50 can provide rigidity, which facilitates structural stability.

In addition, in the related art, the anti-arch cable is connected to the joint member through a trussed pole; and the trussed pole is fixed to the joint member so that the trussed pole and the joint member form a truss. This truss is a rigid body with a first deviation between a center of mass and a center of rigidity thereof. Since the trussed pole is generally longer in length, when crosswind occurs in practical applications, the center of mass is prone to rotation around the center of rigidity. That is, the truss has a tendency to flip. However, in the present application, for the entire semi-rigid anti-arch cable 40, the semi-rigid anti-arch cable 40 is directly connected to the joint member 50, and there is no need to arrange a longer trussed pole 60 between the semi-rigid anti-arch cable 40 and the joint member 50 to connect the two. A "joint connecting component" formed by the rigid part 410 being directly connected to the joint member 50 is also a rigid body. However, in the present application, by omitting the longer trussed pole, the rigid body with a small deviation between the center of rigidity and the center of mass is obtained. That is, a second deviation between the center of mass and the center of rigidity of the rigid body in the present application is less than the first deviation. Therefore, the flexible bracket 1 in the present application can cope with larger crosswind and is more stable than the structure in the related art. In addition, in the present application, the trussed poles 60, the stabilizing cable 30, and the semi-rigid anti-arch cable 40 are all mounted to the joint member 50. The trussed poles 60, the stabilizing cable 30, and the semi-rigid anti-arch cable 40 are mounted to the same joint, which can reduce the length of the anti-arch cable and the number of the joint members compared with the related art in which two ends of the anti-arch cable are connected to the support member, which saves costs of the cables and the joint members 50 on the premise of meeting a carrying requirement and also simplifies the mounting steps.

Referring to FIG. 1 and FIG. 7, in some embodiments, the rigid part 410 of the semi-rigid anti-arch cable 40 and the joint member 50 are relatively movably connected to each other. The rigid part 410 and the joint member 50 are relatively movable, including sliding in one or more directions or rotating in one or more directions. In the present application, the rigid part 410 of the semi-rigid anti-arch cable 40 and the joint member 50 of the flexible bracket 1 are relatively movably connected to each other. In this way, the "joint connecting component" formed by the rigid part 410 of the semi-rigid anti-arch cable 40 and the joint member 50 can provide rigidity on the one hand, and on the other hand, can also be deformed to adapt to changes in the wind load, thereby preventing the joint member 50 form being sheared and damaged due to stress concentration.

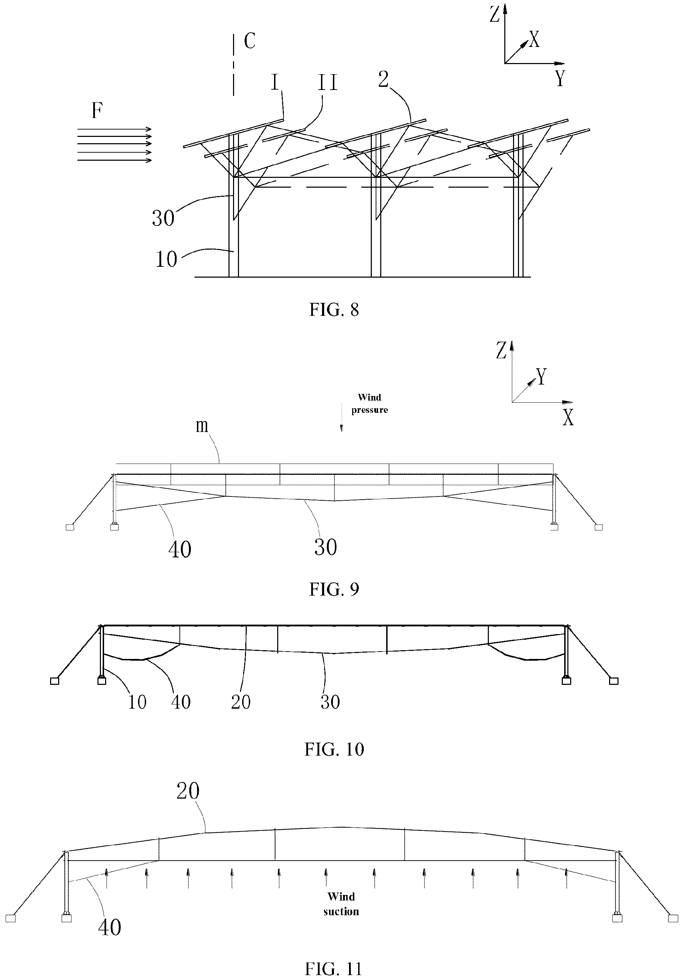

Specifically, referring to FIG. 8, FIG. 8 is a schematic diagram of force on the flexible bracket 1 when subjected to crosswind according to the present application. When the flexible bracket 1 is in use, under normal circumstances, the photovoltaic module 2 bears only wind pressure or wind suction. When the photovoltaic module 2 bears the wind suction, tension borne by the anti-arch cable is located in a plane C. The plane C is a vertical plane and parallel to the first direction X. In FIG. 8, the plane C is perpendicular to the plane of the drawing. However, when the crosswind F as shown in FIG. 8 is encountered, in which the crosswind F refers to wind in a horizontal direction, which may be the second direction Y as shown in FIG. 1 in the present application, the photovoltaic module 2 may be shifted in the first direction X and the second direction Y. As shown in FIG. 8, the photovoltaic module 2 is shifted from Position I to Position II, causing the semi-rigid anti-arch cable 40 to be subjected to tension outside the plane C.

When the flexible bracket 1 in the embodiments of the present application encounters the crosswind in the second direction Y, referring to FIG. 6 and FIG. 7, since the rigid part 410 and the joint member 50 are movable relative to each other, the joint member 50 also moves relative to the rigid part 410 when moving with the photovoltaic module 2, thereby preventing a shear force from being formed between the joint member 50 and the rigid part 410 and then preventing damage to the joint member 50.

In the above embodiments, the description is based on an example in which the direction of the crosswind F is exactly along the second direction Y. However, it should be recognized that the direction of the crosswind may be in other directions. For example, referring to FIG. 8, the direction of the crosswind F is at an acute angle to the second direction Y, for example, is inclinedly upward relative to the horizontal direction. In this case, since the rigid part 410 and the joint member 50 are relatively movable, a component force of the crosswind F in the second direction Y may cause the photovoltaic module 2 to shift from Position I to Position II in FIG. 8. In this case, when the joint member 50 also moves relative to the rigid part 410 when moving with the photovoltaic module 2, thereby preventing the shear force from being formed between the joint member 50 and the rigid part 410 and then preventing damage to the joint member 50.

In addition, as described above, in the present application, by omitting the longer trussed pole, the rigid body with a small deviation between the center of rigidity and the center of mass is obtained. That is, the second deviation between the center of mass and the center of rigidity of the rigid body in the present application is less than the first deviation. Therefore, the flexible bracket 1 in the present application can cope with larger crosswind and is more stable than the structure in the related art. Moreover, even if the center of mass rotates around the center of rigidity, the rigid part 410 can move relative to the joint member 50 and can adapt to such rotation, thereby preventing easy damage to the joint member 50.

In addition, as shown in FIG. 1, two ends of the semi-rigid anti-arch cable 40 are connected to the joint member 50 and the support member 10 respectively. In this manner, a middle portion of the semi-rigid anti-arch cable 40 is not connected to other cables or support members, and the semi-rigid anti-arch cables 40 may be provided only at the head and the tail of the stabilizing cable 30. In this way, the length of the semi-rigid anti-arch cable 40 is shorter, which reduces the cable cost while ensuring stability. During specific arrangement, the joint member 50 is arranged adjacent to the support member 10, that is, at the head or the tail of the stabilizing cable 30, and the semi-rigid anti-arch cable 40 is not required to extend from one support member 10 to another adjacent support member 10 and is shorter in length.

In some embodiments, referring to FIG. 2, a length of a portion of the stabilizing cable 30 between the joint member 50 and the support member 10 is L1, and a total length of the stabilizing cable 10 is L2, where L1/L2 ranges from 1/5 to 1/4. In the present application, the total length L2 of the stabilizing cable 30 refers to a length of the stabilizing cable 30 between two adjacent support members 10 in the first direction X. The length L1 of the stabilizing cable 30 between the joint member 50 and the support member 10 is related to the position of the joint member 50 on the stabilizing cable 30. L1/L2 may also be called a span of the joint member 50 on the stabilizing cable 30. That is, the span of the joint member 50 on the stabilizing cable 30 ranges from 1/5 to 1/4.

Referring to FIG. 2, from the head or the tail towards the middle of the stabilizing cable 30, internal stress of the stabilizing cable 30 tends decrease. by setting the span of the joint member 50 on the stabilizing cable 30 to range from 1/5 to 1/4 can ensure support for the middle section of the stabilizing cable 30 and can also prevent an excessive length of the semi-rigid anti-arch cable 40.

According to some embodiments of the present application, referring to FIG. 6 and FIG. 7, the rigid part 410 and the joint member 50 are relatively movable at least in the second direction Y, the second direction Y is perpendicular to the first direction X, and the second direction Y is perpendicular to the height direction Z of the support member 10. For example, the rigid part 410 and the joint member 50 can slide or rotate relative to each other in the second direction Y. For example, the first direction X is the eastward-westward direction, and the second direction Y is the northward-southward direction. When the flexible bracket 1 is in use, the plurality of photovoltaic modules 2 are arranged in rows along the first direction X and arranged in a plurality of rows along the second direction Y. Generally, the direction of the crosswind is along the second direction Y. In this way, when in use, the flexible bracket 1 can still maintain better stability even when encountering the crosswind.

According to some embodiments of the present application, referring to FIG. 6 and FIG. 7, the rigid part 410 and the joint member 50 are relatively movable at least in the height direction Z of the support member 10. In this way, referring to FIG. 8, when the crosswind F encountered by the flexible bracket 1 when in use has a component force in the height direction Z of the support member 10, the rigid part 410 and the joint member 50 are relatively movable in the height direction Z of the support member 10, thereby preventing a shear force from being forming between the joint member 50 and the rigid part 410 and then preventing damage to the joint member 50. Preferably, the rigid part 410 and the joint member 50 are configured to be relatively movable in the second direction Y and to be relatively movable in the first direction X. For example, the rigid part 410 may be configured to be relatively movable in the second direction Y at a junction with the joint member 50, and the junction is relatively movable in the first direction X relative to the joint member 50. In this way, when in use, the flexible bracket 1 can maintain better stability when encountering crosswind in the first direction X or the second direction Y.

According to some embodiments of the present application, referring to FIG. 7, the rigid part 410 and the joint member 50 are in spherical pair fit to be movable relative to each other. For example, one of the rigid part and the joint member is provided with an outer spherical surface, and another of the rigid part and the joint member is provided with an inner spherical surface. The outer spherical surface fits the inner spherical surface to form the spherical pair fit. The rigid part 410 and the joint member 50 are in spherical pair fit, and the two can move relative to each other in any direction including the first direction X, the second direction Y, and the height direction Z of the support member 10. Therefore, the flexible bracket 1 can resist crosswind in any direction. When the flexible bracket 1 is mounted, it is only required to consider how to maximize the lighting of the photovoltaic module 2, without considering the direction of the crosswind in the environment, thereby improving convenience of use of the flexible bracket 1.

According to some embodiments of the present application, referring to FIG. 1 and FIG. 7, the semi-rigid anti-arch cable 40 includes the rigid part 410 and the flexible cable 420 connected to the rigid part 410. The rigid part 410 is movably connected to the joint member 50, and the flexible cable 420 is connected to the support member 10. The flexible cable 420 and the rigid part 410 may be connected to each other by a fixed structure or bonded to each other by high-strength adhesive. Preferably, the flexible cable 420 is selected to be a flexible steel wire.

The rigid part 410 is connected to the flexible cable 420 to form a semi-rigid structure. The rigid part 410 is connected to the joint member 50 to form a rigid body to support the flexible cable 420. In addition, the rigid part 410 and the joint member 50 are relatively movable. The joint member 50 is also movable relative to the rigid part 410 when moving with the photovoltaic module 2, thereby preventing a shear force from being formed between the joint member 50 and the rigid part 410 and then preventing damage to the joint member 50. In addition, the rigid part 410 is connected to the flexible cable 420 to form the semi-rigid structure, which may be manufactured based on the existing flexible cable, without the need to manufacture a non-standard flexible cable, helping reduce the cost. The rigid part 410 is fixedly connected to the flexible cable 420, and a specific manner is not limited. For example, the rigid part 410 may be connected to the flexible cable 420 through an anchor.

As described above, the rigid part 410 of the semi-rigid anti-arch cable and the joint member 50 form the "joint connecting component", and at the same time, the rigid part 410 is movable relative to the joint member 50, so that the "joint connecting component" can provide rigidity on the one hand, and on the other hand, can also be deformed to adapt to changes in the wind load, thereby preventing the joint member 50 form being sheared and damaged due to stress concentration. Moreover, the joint connecting component has a small deviation between the center of mass and the center of rigidity, and is stable in structure.

In addition, referring to FIG. 9, FIG. 9 is a schematic diagram of the flexible bracket 1 when subjected to wind pressure according to embodiments of the present application. As shown in FIG. 9, the direction of the wind suction is generally vertically upward, that is, perpendicular to a bottom surface and faces upward. However, in practical applications, the direction of the wind suction is often not perpendicular to the ground. In this case, since the rigid part 410 and the joint member 50 are in spherical pair fit, the joint member 50 can adjust its position according to the direction of the wind, thereby preventing easy damage to the joint member 50 due to a shear force.

Referring to FIG. 10 and FIG. 11, FIG. 10 is a schematic diagram of the semi-rigid anti-arch cable 40 of the flexible bracket 1 when being excessively loose according to embodiments of the present application; FIG. 11 is a schematic diagram of the assembly cable 20 of the flexible bracket 1 when being deformed due to wind suction according to embodiments of the present application.

The semi-rigid anti-arch cable 40 is configured to provide tension when flexible bracket 1 is subjected to wind suction, so as to prevent damage to the photovoltaic module 2 due to upward deformation of the assembly cable 20. Therefore, it is very important whether a degree of tightness of the semi-rigid anti-arch cable 40 is appropriate. However, the semi-rigid anti-arch cable 40 is mounted under normal conditions where the joint member 50 is neither subjected to wind pressure nor wind suction, and when it is too loose, the deformation shown in FIG. 11 may occur, and when it is too tight, the service life of the joint member 50 may be affected.

With respect to the above problems, the present application provides a solution for adjusting the degree of tightness of the semi-rigid anti-arch cable 40. Specifically, referring to FIG. 7, the rigid part 410 is configured to be adjustable in length. The rigid part of the semi-rigid anti-arch cable 40 is configured to be adjustable in length, which can realize adjustment of the degree of tightness of the semi-rigid anti-arch cable 40. For example, the rigid part 410 includes a telescopic part and a fixed part. For example, the telescopic part may be a telescopic tube, and the fixed part may be a buckle mechanism to limit the telescopic tube, thereby achieving a purpose of length adjustment.

By making the length of the rigid part 410 adjustable, the degree of tightness of the semi-rigid anti-arch cable 40 can be tested after being mounted. The length of the rigid part 410 can be extended as required, so as to adapt to changing environmental requirements and prevent the semi-rigid anti-arch cable 40 from losing its ability to protect against wind suction due to being too loose.

In addition, referring to FIG. 8, when the crosswind in the second direction Y is encountered, the photovoltaic modules 2 in the second direction Y bear different wind forces, and thus may have different displacements. In this case, the length of the semi-rigid anti-arch cable can be adjusted separately, so as to better adapt to operating conditions of the above different displacements and ensure structural stability of the bracket.

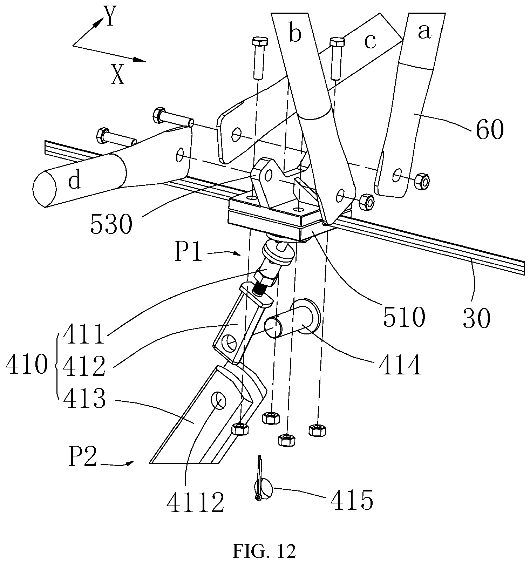

According to some embodiments of the present application, referring to FIG. 12, FIG. 12 is a schematic diagram of the rigid part 410 of the semi-rigid anti-arch cable 40 and the joint member 50 when being assembled according to embodiments of the present application. As shown in FIG. 12, the joint member 50 includes a base body 510. A plurality of trussed poles 60 are connected to the base body 510. The plurality of trussed poles 60 are respectively configured to be connected to the assembly cable 20 or configured to be connected to adjacent joint members 50. The base body 510 is connected to the stabilizing cable 30, and is connected to the semi-rigid anti-arch cable 40. In other implementations, a shape of the base body 510 may be directly configured to enable the base body 510 to be connected to the assembly cable 20, thereby eliminating the need for an additional trussed pole.

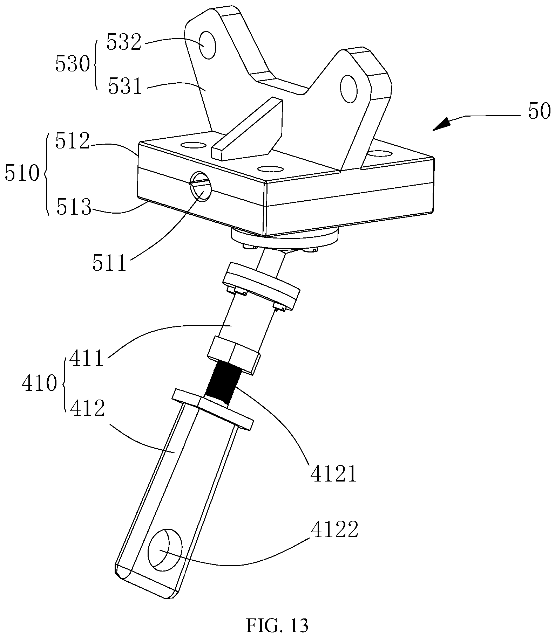

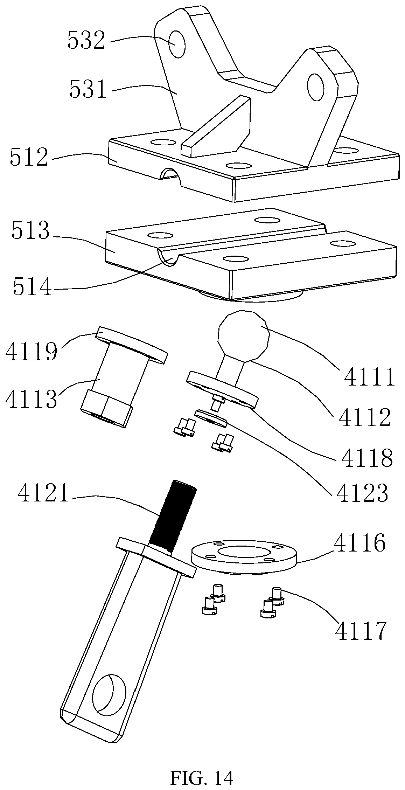

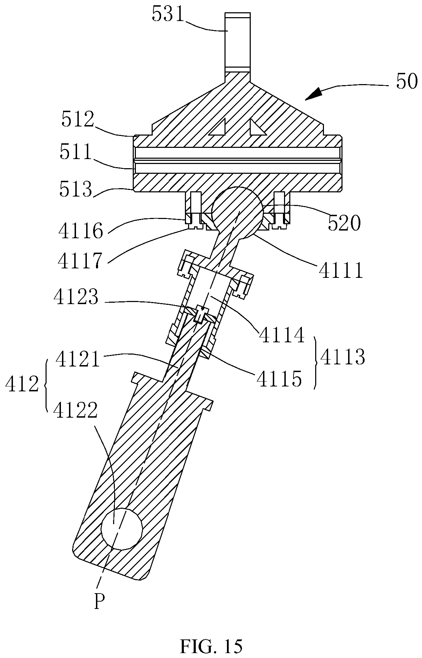

According to some embodiments of the present application, referring to FIG. 13 to FIG. 15, FIG. 13 is a diagram of an assembly of the rigid part 410 of the semi-rigid anti-arch cable 40 and the base body 510 of the joint member 50 according to embodiments of the present application; FIG. 14 is an exploded view of the assembly shown in FIG. 13; and FIG. 15 is a schematic sectional view of the assembly shown in FIG. 13 in a direction in which the rigid part 410 is connected to the joint member 50.

In some embodiments, referring to FIG. 13 and FIG. 14, to facilitate the assembling, the rigid part 410 includes a first connecting member 411 and a second connecting member 412 that are removably connected. The first connecting member 411 is movably connected to the joint member 50, the second connecting member 412 is connected to a cable plate 413. The cable plate 413 may be connected to the flexible cable 420 through an anchor (not shown). Specifically, the second connecting member 412 and the cable plate 413 are respectively provided with pin holes 4122, and are fixedly or movably connected to each other through a pin shaft 414 and a split pin 415.

In some embodiments, the rigid part 410 and the joint member 50 are in spherical pair fit to be movable relative to each other. Specifically, as shown in FIG. 15, one of the rigid part 410 and the joint member 50 is provided with an outer spherical surface 4111, and another of the rigid part 410 and the joint member 50 is provided with an inner spherical surface 520. The outer spherical surface 4111 fits the inner spherical surface 520 to form the spherical pair fit. For example, the joint member 50 is provided with a ball socket (not numbered) with the inner spherical surface 520, the rigid part 410 is provided with a spherical hinge fitting member 4112 having the outer spherical surface 4111; and the spherical hinge fitting member 4112 is inserted into the ball socket.

According to some embodiments of the present application, referring to FIG. 7 and FIG. 12, the rigid part 410 includes the first connecting member 411 and the second connecting member 412 that form a screw fitting pair. The first connecting member 411 is movably connected to the joint member 50, and the second connecting member 412 is configured to be connected to the support member 10. Specifically, referring to FIG. 12, the second connecting member 412 is connected to the flexible cable 420 through the cable plate 413, and is connected to the support member 10 through the flexible cable 420. The length of the rigid part 410 is adjusted through screw fit. During specific adjustment, the first connecting member 411 and the second connecting member 412 are rotated relative to each other, which is convenient to operate and facilitates quick adjustment.

In some embodiments, referring to FIG. 12, the rigid part 410 of the semi-rigid anti-arch cable 40 includes a first part P1 and a second part P2 movably connected to the first part P1. The first part is connected to the joint member 50, and the second part is connected to the support member 10. For example, the first part P1 includes the first connecting member 411 and the second connecting member 412 that form the screw fitting pair. The second part P2 includes the cable plate 413. An end of the cable plate 413 in a length direction is connected to the flexible cable 420. Specifically, the cable plate 413 may be connected to the flexible cable through an anchor. Another end of the cable plate 413 in the length direction is fixedly connected or relatively rotatably connected to the second connecting member 412. Specifically, referring to FIG. 12 and FIG. 13, the second connecting member 412 and the cable plate 413 are respectively provided with pin holes 4122, and are connected to each other through hole 511 the pin shaft 414 and the split pin 415. When the cable plate 413 and the second connecting member 412 are relatively rotatably connected to each other, the cable plate 413 and the second connecting member 412 may be connected in a relatively rotatable manner in the first direction X or the second direction Y. Moreover, the scheme in which the cable plate 413 and the second connecting member 412 are connected in a relatively rotatable manner in the first direction X or the second direction Y and the scheme in which the rigid part 410 and the joint member 50 are movable relative to each other in the first direction X and/or the second direction Y may be employed in any combination, so as to better enable the flexible bracket 1 to resist crosswind. For example, the cable plate 413 and the second connecting member 412 are movable relative to each other in the second direction Y, and at the same time, the rigid part 410 and the joint member 50 are movable relative to each other in the second direction Y. In this way, when encountering the crosswind in the second direction Y, the rigid part 410 and the joint member 50 are movable relative to each other in the second direction Y to prevent shearing from being formed between the joint member 50 and the rigid part 410. In addition, the cable plate 413 and the second connecting member 412 are movable relative to each other in the second direction Y, so that the flexible cable 420 and the cable plate 413 can also move to adapt to the crosswind, which can reduce wear and tear between the flexible cable 420 and the cable plate 413. The first part P1 and the second part P2 of the rigid part 410 are movably connected to each other and can move to adapt to the crosswind, thereby reducing the wear and tear between the two parts.

It may be understood that specific configurations of the first part P1 and the second part P2 are not limited. In other implementations, the first part P1 is not limited to including the first connecting member 411 and the second connecting member 412 that form the screw fitting pair. For example, the first part P1 may be configured to be not adjustable in length. In another example, the first part P1 and the joint member 50 may be relatively movably connected to each other or may be fixedly connected to each other.

In some embodiments, referring to FIG. 14 and FIG. 15, the first connecting member 411 is connected to the joint member 50, specifically connected to the base body 510. The first connecting member 411 includes a sleeve 4113 and the spherical hinge fitting member 4112 located at a head end of the sleeve 4113. An inner cavity 4114 of the sleeve 4113 includes a threaded section 4115, and the spherical hinge fitting member 4112 has the outer spherical surface 4111. Correspondingly, the base body 510 of the joint member 50 is provided with the ball socket (not numbered) having the inner spherical surface 520. The spherical hinge fitting member 4112 is inserted into the ball socket so that the first connecting member 411 and the base body 510 of the joint member 50 form the spherical fitting pair. Specifically, the spherical hinge fitting member 4112 is inserted into the ball socket and is fixed to the base body 510 through a spherical hinge end over 4116 and a screw 4117. It may be understood that positions of the inner spherical surface 520 and the outer spherical surface 4111 may alternatively be interchanged.

The second connecting member 412 includes a screw rod 4121 fitting the threaded section 4115. The screw rod 4121 is in threaded fit with the threaded section 4115 so that the second connecting member 412 and the first connecting member 411 form the screw fitting pair.

In the above manner, the first connecting member 411 and the second connecting member 412 form the screw fitting pair, and the first connecting member 411 and the base body 510 of the joint member 50 form the spherical fitting pair. The degree of tightness of the semi-rigid anti-arch cable 40 can be easily adjusted by a combination of the screw fitting pair and the spherical fitting pair.

Specifically, referring to FIG. 7 and FIG. 15, a process of adjusting the degree of tightness of the semi-rigid anti-arch cable 40 is briefly described as follows: the spherical hinge fitting member 4112 is rotatable relative to the base body 510, so the sleeve 4113 can rotate around an axis P of the sleeve 4113. When the degree of tightness of the semi-rigid anti-arch cable 40 is required to be adjusted, the sleeve 4113 is rotated around the axis P thereof, and the screw rod 4121 being in screw fitting with the sleeve 4113 can only move linearly under the restriction of the flexible cable 420, so as to tighten the flexible cable 420 or relax the flexible cable 420 to realize the adjustment of the degree of tightness of the semi-rigid anti-arch cable 40.

In addition, the first connecting member 411 and the base body 510 of the joint member 50 form the spherical fitting pair. In addition to being used in conjunction with the screw fitting pair formed by the first connecting member 411 and the second connecting member 412 to adjust the tightness of the semi-rigid reverse arch cable 40, the spherical fitting pair also enables the flexible bracket 1 to resist the crosswind in any direction, as described above. That is, the spherical fitting pair is also used to adjust the degree of tightness of the semi-rigid anti-arch cable 40 and to realize resistance of the flexible bracket 1 to the crosswind and simplify the structure of the flexible bracket 1.

Referring to FIG. 14 and FIG. 15, in order to prevent accidental separation of the second connecting member 412 from the first connecting member 411 during the adjustment of the degree of tightness of the semi-rigid anti-arch cable 40, a limiting member 4123 is further arranged on the screw rod 4121 of the second connecting member 412. The limiting member 4123 is configured to prevent the screw rod 4121 from being separated from the sleeve 4113.

There are a variety of manners to prevent the separation by using the limiting member 4123. For example, the limiting member 4123 is located on a side of the threaded section 4115 adjacent to the joint member 50. In a radial direction of the sleeve 4113, a dimension of the limiting member 4123 is greater than an inner diameter of the threaded section 4115, thereby preventing the screw rod 4121 from being separated from the sleeve 4113. In another example, the inner cavity 4114 of the sleeve 4113 is provided with a blocking structure configured to axially block the limiting member 4123. The blocking structure may specifically be an annular step arranged on an inner wall of the inner cavity 4114. The limiting member 4123 is configured to prevent the screw rod 4121 from being separated from the sleeve 4113, which prevents accidental separation of the second connecting member 412 from the first connecting member 411 during the adjustment of the degree of tightness of the semi-rigid anti-arch cable 40, thereby preventing instability of the flexible bracket 1.

In some embodiments, referring to FIG. 15, in an axial direction of the sleeve 4113, the spherical hinge fitting member 4112 is removably arranged at the head end (not numbered) of the sleeve 4113 in the axial direction, the threaded section 4115 is arranged at the tail end (not numbered) of the sleeve 4113 in the axial direction. The limiting member 4123 is removably arranged on the screw rod 4121. The dimension of the limiting member 4123 is greater than the inner diameter of the threaded section 4115.

In the above manner, when the limiting member 4123 moves in the axial direction of the sleeve 4113 relative to the sleeve 4113, the limiting member 4123 cannot pass through the threaded section 4115, and the limiting member 4123 may prevent the screw rod 4121 from being separated from the sleeve 4113 when the screw rod 4121 moves away from the joint member 50, thereby preventing accidental separation of the second connecting member 412 from the first connecting member 411 during the adjustment of the degree of tightness of the semi-rigid anti-arch cable 40.

On the premise of realizing a separation prevention function, the assembling of the first connecting member 411 and the second connecting member 412 is also facilitated by removably arranging the spherical hinge fitting member 4112 at the head end of the sleeve 4113 and removably arranging the limiting member 4123 on the screw rod 4121. Specifically, during the assembling, the screw rod 4121 is first extended from the head end of the sleeve 4113 into the inner cavity 4114 of the sleeve 4113 and into the threaded section 4115 for threaded connection, then the limiting member 4123 is mounted on the screw rod 4121, and finally, the spherical hinge fitting member 4112 is mounted to the head end of the sleeve 4113 so as to close the head end of the sleeve 4113. In some embodiments, a length of the screw rod 4121 is greater than an axial length of the sleeve 4113. In this way, the screw rod 4121 can extend from the tail end of the sleeve 4113 into the sleeve 4113 and then extend out of the head end of the sleeve 4113, thereby having a large operating space to facilitate the mounting of the limiting member 4123.

In some embodiments, referring to FIG. 14 and FIG. 15, the head end of the sleeve 4113 is provided with a first flange 4118. The spherical hinge fitting member 4112 is provided with a second flange 4119. The second flange 4119 is removably connected to the first flange 4118 via a fastener (not numbered). The connection between the spherical hinge fitting member 4112 and the sleeve 4113 may not be limited thereto, for example, may also be a buckle connection, a pin connection, or the like. The sleeve 4113 and the spherical hinge fitting member 4112 are connected to each other through two flanges, which can be quickly aligned and assembled.

A specific shape and a mounting manner of the limiting member 4123 are not limited. For example, the limiting member 4123 may be mounted at an end of the screw rod 4121 and be secured by a screw. In another example, the limiting member 4123 has a plate-like structure that is sleeved on the screw rod 4121 through interference fit and is fixedly connected to the screw rod 4121.

According to some embodiments of the present application, referring to FIG. 1 and FIG. 6, the joint member 50 is mounted on the stabilizing cable 30 in a position-adjustable manner. For example, the base body 510 of the joint member 50 is removably fixedly connected to the stabilizing cable 30. In this way, the joint member 50 can freely adjust the mounting position on the stabilizing cable 30 and can be configured to adjust the degree of tightness of the semi-rigid anti-arch cable 40. Moreover, the position adjustment of the joint member 50 may alternatively be combined with the length adjustment of the rigid part 410, which can more conveniently adjust the degree of tightness of the semi-rigid anti-arch cable 40.

In some embodiments, referring to FIG. 1 and FIG. 6, the stabilizing cable 30 is in frictional connection with the joint member 50. The "frictional connection" specifies that the stabilizing cable 30 and the joint member 50 are relatively positioned through friction force. For example, the joint member 50 is provided with a slot, and the stabilizing cable 30 is positioned by a friction force between the slot and the stabilizing cable 30. When the position of the joint member 50 is required to be adjusted, the joint member 50 is required to overcome the friction force and move relative to the stabilizing cable 30, without any removing action, leading to high operation efficiency.

Referring to FIG. 12 and FIG. 13, for example, the base body 510 of the joint member 50 is provided with a through hole 511. The stabilizing cable 30 extends through the through hole 511. An outer diameter of the stabilizing cable 30 matches an inner hole of the through hole 511, so that the stabilizing cable 30 is in frictional connection with the joint member 50. In this manner, it is convenient to adjust the mounting position of the joint member 50, and the fixing scheme is simplified by eliminating the use of bolts to connect the stabilizing cable 30 and the bracket.

As shown in FIG. 13 and FIG. 14, for example, the base body 510 includes a first base body 512 and a second base body 513 that are removably connected together. The second base body 513 and the first base body 512 define the through hole 511. Therefore, the stabilizing cable 30 can be easily mounted when the first base body 512 and the second base body 513 are in a separated state. Specifically, each of the first base body 512 and the second base body 513 is provided with a groove 514 (such as a semicircular groove) for forming the above through hole 511. The first base body 512 and the second base body 513 are connected together to form the complete through hole 511. During the mounting of the stabilizing cable 30, the stabilizing cable 30 is put into the groove 514 of the first base body 512 or the second base body 513, and then the first base body 512 and the second base body 513 are connected through a bolt. Compared with directly inserting the stabilizing cable 30 into the through hole 511, it is not required to accurately align the stabilizing cable 30 with the through hole 511 in an axial direction, which is easy to operate and has high mounting efficiency.

According to some embodiments of the present application, referring to FIG. 6, FIG. 7, and FIG. 12, the flexible bracket 1 further includes trussed poles 60 connected to a mounting position 530. Part of the trussed poles 60 are connected to the assembly cable 20. In the second direction, adjacent joint members 50 are interconnected through at least one trussed pole 60. The second direction Y is perpendicular to the first direction X and perpendicular to the height direction Z of the support member.

For example, the joint member 50 includes a plurality of mounting positions 530 for mounting the base body 510. A plurality of trussed poles 60 are mounted at the mounting position 530.

In a preferred implementation, the mounting position 530 includes a lug 531 protruding from the base body 510. Each lug 531 is provided with a connecting hole 532. The trussed pole 60 is mounted to the connecting hole 532. Specifically, the trussed pole 60 may be mounted to the connecting hole 532 through a screw 4117 or other suitable fasteners. The lug 531 protrudes from the base body 510 and provides a larger operating space during the mounting of the trussed pole 60.

Further, referring to FIG. 12 to FIG. 14, two lugs 531 are spaced apart in the second direction Y. The connecting hole 532 extends through the lug 531 in the second direction Y. In this way, the trussed poles 60 may be respectively mounted on two sides of each lug 531 in the second direction Y, and a set of fasteners may be shared to simplify the structure. In this way, each base body 510 may be connected to four trussed poles 60.

Referring to FIG. 6, FIG. 7, and FIG. 12, in the second direction Y, a plurality of rows of photovoltaic modules 2 are arranged. Poles a and b of the four trussed poles 60 may be configured to connect the first sub-cable 220 and the second sub-cable 230 of the assembly cable 20. Poles c and d of the four trussed poles 60 may be configured to interconnect two adjacent joint members 50 in the second direction Y. In this way, up to four trussed poles 60 can be connected by using only the base body 510 of one joint member 50, thereby realizing the connection with the assembly cable 20 and the interconnection of two adjacent joint members 50 in the second direction Y. After different joint members 50 are connected, the truss rigidity can be provided in the plane, and the load can be dispersed to a plurality of stress-bearing regions, resulting in good stability even in large-span scenarios.

Specifically, as shown in FIG. 6, in the second direction Y, a plurality of joint members 50 are interconnected to form a cable truss, thereby providing the truss rigidity. In addition, in the first direction X, a plurality of such cable trusses are formed. As shown in FIG. 9, when the photovoltaic module 2 is subjected to wind pressure, a plurality of cable trusses form a plurality of stress-bearing regions m in the first direction X to disperse and bear the load. The force on a single stress-bearing region m is small, which is beneficial to increasing the span of the flexible bracket 1, that is, the length in the first direction X. The stress-bearing regions m are respectively formed between adjacent cable trusses and between the cable trusses and the support members 10.

In the above embodiments, the plurality of trussed poles are arranged on the joint member 50 to simultaneously realize the connection with the assembly cable 20 and the interconnection of two adjacent joint members 50 in the second direction Y, so that a stable system for supporting the assembly cable 20, the stabilizing cable 30, and the semi-rigid anti-arch cable 40 is established, and the plurality of stress-bearing regions m are further formed in the first direction X to disperse and bear the load, so as to help increase the span of the flexible bracket 1.

According to some embodiments of the present application, referring to FIG. 1, in the first direction X, each of the head and the tail of the stabilizing cable 30 is provided with the joint member 50 and the semi-rigid anti-arch cable 40. The middle section of the stabilizing cable 30 is connected to the assembly cable 20 through support joints 70. The semi-rigid anti-arch cables are provided only at the head and the tail of the stabilizing cable 30, the semi-rigid anti-arch cables 40 are provided. The length of the semi-rigid anti-arch cable is shorter, which reduces the cable cost under the cavity of ensuring stability. The middle section of the stabilizing cable 30 is connected to the assembly cable 20 through one or more support joints 70, improving and stabilizing wind resistance of the middle section. The middle section of the stabilizing cable 30 refers to a portion of the stabilizing cable 30 located between two joint members 50.

Further, the middle section of the stabilizing cable 30 is in frictional connection with the support joints 70. The "frictional connection" herein may be exactly the same as the frictional connection between the stabilizing cable 30 and the joint member 50, so the details thereof will be repeatedly described. In this way, the positions of the support joints 70 at the middle section of the stabilizing cable 30 can be adjusted as required, which is beneficial to improving and stabilizing the wind resistance of the middle section.

According to some embodiments of the present application, as shown in FIG. 1, a photovoltaic system is further proposed. The photovoltaic system includes the flexible bracket 1 in any one of the above embodiments and a plurality of photovoltaic modules 2. The plurality of photovoltaic modules 2 are mounted on the carrying surface 210.

In the above photovoltaic system, the first end 401 of the semi-rigid anti-arch cable 40 of the flexible bracket 1 is configured to have the rigid part 410. In this way, the rigid part 410 of the semi-rigid anti-arch cable 40 and the joint member 50 form the "joint connecting component", which can provide rigidity on the one hand, and on the other hand, the "joint connecting component" has a small deviation between the center of rigidity and the center of mass and is not easy to flip. Therefore, the flexible bracket 1 in the present application has a more stable structure, thereby ensuring normal operation of the photovoltaic system. In addition, the rigid part 410 and the joint member 50 may be configured to be relatively movable and connected to each other, and can also be deformed to adapt to changes in the wind load, thereby preventing the joint member 50 form being sheared and damaged due to stress concentration, so that the flexible bracket 1 has a more stable structure.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

In the description of the present application, the terms "first" and "second" are used for descriptive purposes only, which cannot be construed as indicating or implying a relative importance, or implicitly specifying the number of the indicated technical features. Thus, the features defined by "first" and "second" may explicitly or implicitly include one or more features. In the description of the embodiments of the present application, the term "a plurality of' refers to more than two (including two), and similarly, "a plurality of groups" refers to more than two (including two) groups.

In the present application, unless otherwise specified and defined explicitly, the terms "mounting", "coupling", "connection ", and "fixation" should be understood in a broad sense. For example, they may refer to a fixed connection, a detachable connection, or an integral connection; or may refer to a mechanical connection or electrical connection; or may refer to a direct connection, an indirect connection via an intermediate medium, an internal connection between two elements, or interaction between two elements, unless otherwise explicitly defined. Those of ordinary skill in the art can understand specific meanings of these terms in the present application according to specific situations.

In the present application, unless otherwise explicitly specified and defined, the expression a first feature being "on" or "under" a second feature may be the case that the first feature is in direct contact with the second feature, or the first feature is in indirect contact with the second feature via an intermediate medium. Furthermore, the expression the first feature being "over", "above" and "on top of' the second feature may be the case that the first feature is directly above or obliquely above the second feature, or only means that the first feature is higher in level than the second feature. The expression the first feature being "below", "underneath" or "under" the second feature may be the case that the first feature is directly underneath or obliquely underneath the second feature, or only means that the first feature is lower in level than the second feature.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present application, which are described specifically and in detail, and therefore cannot be construed as a limitation on the patent scope of the present application. It should be pointed out that those of ordinary skill in the art may also make several variants and improvements without departing from the concept of the present application, all of which fall within the protection scope of the present application. Therefore, the patent protection scope of the present application shall be subject to the appended claims.

## Claims

1. A flexible bracket, comprising:
a support member, at least two support members being spaced apart in a first direction, an assembly cable and a stabilizing cable being mounted between two adjacent support members in the first direction, wherein the assembly cable forms a carrying surface;
a joint member connected to both the stabilizing cable and the assembly cable; and
a semi-rigid anti-arch cable, a first end of the semi-rigid anti-arch cable having a rigid part connected to the joint member, and a second end of the semi-rigid anti-arch cable being connected to the support member.

2. The flexible bracket according to claim 1, wherein the rigid part and the joint member are relatively movably connected to each other.

3. The flexible bracket according to claim 2, wherein the rigid part and the joint member are movable relative to each other at least in a second direction, the second direction being perpendicular to the first direction and perpendicular to a height direction of the support member.

4. The flexible bracket according to claim 2, wherein the rigid part and the joint member are movable relative to each other at least in a height direction of the support member.

5. The flexible bracket according to claim 2, wherein the semi-rigid anti-arch cable comprises the rigid part and a flexible cable connected to the rigid part, the flexible cable being connected to the support member.

6. The flexible bracket according to claim 2, wherein the rigid part and the joint member are in spherical pair fit to be relatively movably connected to each other.

7. The flexible bracket according to claim 1, wherein the rigid part is configured to be adjustable in length.

8. The flexible bracket according to any one of claims 1 to 7, wherein the rigid part comprises a first connecting member and a second connecting member that form a screw fitting pair, the first connecting member being connected to the joint member, and the second connecting member being configured to be connected to the support member.

9. The flexible bracket according to claim 8, wherein,
the first connecting member comprises a sleeve and a spherical hinge fitting member located at a head end of the sleeve; an inner cavity of the sleeve comprises a threaded section; and the spherical hinge fitting member and the joint member form a spherical fitting pair; and
the second connecting member comprises a screw rod fitting the threaded section, wherein a limiting member is further arranged on the screw rod, the limiting member being configured to prevent the screw rod from being separated from the sleeve.

10. The flexible bracket according to claim 9, wherein the limiting member is located on a side of the threaded section adjacent to the joint member; and in a radial direction of the sleeve, a dimension of the limiting member is greater than an inner diameter of the threaded section; or the inner cavity of the sleeve is provided with a blocking structure configured to axially block the limiting member.

11. The flexible bracket according to claim 10, wherein in an axial direction of the sleeve, the spherical hinge fitting member is removably arranged at the head end of the sleeve, the threaded section is arranged at a tail end of the sleeve, and the limiting member is removably arranged on the screw rod.

12. The flexible bracket according to any one of claims 1 to 7, wherein the rigid part comprises a first part and a second part movably connected to the first part, the first part being connected to the joint member, and the second part being connected to the support member.

13. The flexible bracket according to claim 1, wherein the joint member is mounted on the stabilizing cable in a position-adjustable manner.

14. The flexible bracket according to claim 13, wherein the stabilizing cable is in frictional connection with the joint member.

15. The flexible bracket according to claim 14, wherein the joint member is provided with a through hole; the stabilizing cable extends through the through hole; and an outer diameter of the stabilizing cable matches an inner hole of the through hole.

16. The flexible bracket according to claim 1, further comprising trussed poles connected to the joint member, wherein part of the trussed poles are connected to the assembly cable; and in a second direction, adjacent joint members are interconnected through at least one trussed pole, the second direction being perpendicular to the first direction and perpendicular to a height direction of the support member.

17. The flexible bracket according to claim 1, wherein in the first direction, each of a head and a tail of the stabilizing cable is provided with the joint member and the semi-rigid anti-arch cable, and a middle section of the stabilizing cable is connected to the assembly cable through support joints.

18. The flexible bracket according to claim 17, wherein a length of a portion of the stabilizing cable between the joint member and the support member is L1, and a total length of the stabilizing cable is L2, wherein L1/L2 ranges from 1/5 to 1/4.

19. The flexible bracket according to claim 1, wherein in a height direction of the support member, the first end of the semi-rigid anti-arch cable is higher than the second end of the semi-rigid anti-arch cable; and the stabilizing cable is configured in an arch shape with an opening facing upward.

20. A photovoltaic system, comprising:
the flexible bracket according to any one of claims 1 to 19; and
a plurality of photovoltaic modules, the photovoltaic modules being mounted on the carrying surface.
